# EUROPÄISCHE PATENTSCHRIFT

(11) **EP 1 084 620 B1**
(45) Veröffentlichungstag und Bekanntmachung des Hinweises auf die Patenterteilung: **04.08.2004**
(21) Anmeldenummer: 00118216.1
(22) Anmeldetag: 01.09.2000
(51) Int. Cl.: A22C 13/00, B32B 27/34, B65D 65/40

(54) **Mehrschichtig coextrudierte biaxial gereckte Hochbarriere-Kunststoffhülle mit verminderter Haftung zum Füllgut sowie deren Verwendung als Nahrungsmittelhülle**
Multilayered coextruded biaxially stretched tubular casing with improved oxygen barrier and reduced adhesion to the pasty filling material and its use as tubular food casing
Enveloppe tubulaire étirée biaxialement et coextrudée ayant des propriétés de barrière à la perméation et adhésion réduite à la matière de remplissage pâteuse et son utilisation comme enveloppes tubulaires pour aliments

(30) Priorität: 14.09.1999 DE 19943909
(43) Veröffentlichungstag der Anmeldung: 21.03.2001
(73) Patentinhaber: Wolff Walsrode AG, 29655 Walsrode (DE)
(72) Erfinder: Schröder, Nils, Dr., 29683 Fallingbostel (DE); Wolf, Detlef, Dr., 29683 Fallingbostel (DE)
(74) Vertreter: Pettrich, Klaus-Günter, Dr.

(56) Entgegenhaltungen:
- EP-A- 0 530 549
- EP-A- 0 603 676
- EP-A- 0 603 678
- EP-A- 0 758 527

## Beschreibung

Die vorliegende Erfindung betrifft eine schlauchförmige, nahtlose, mindestens fünfschichtige, biaxial gereckte, schrumpffähige Hülle für die dauerhafte und faltenfreie Umhüllung von pastösen oder flüssigen Gütern, insbesondere Nahrungsmitteln, die durch eine außergewöhnlich hohe Wasserdampf- und Sauerstoffbarriere gekennzeichnet ist und geringe Haftung zum Füllgut zeigt.

Nahtlose Kunststoffhüllen werden häufig zur Umhüllung von pastösen oder flüssigen Gütern zu Herstellungs- und/oder Verpackungszwecken eingesetzt. Typische Anwendung sind die Verwendung solcher Hüllen zur Herstellung und/oder Verpackung von Brüh- und Kochwürsten, Schmelzkäse, Suppen oder stark fetthaltigen Pasten. Je nach herzustellendem bzw. zu verpackendem Gut müssen allerdings umfangreiche spezifische Anforderungen erfüllt werden, um den Anwendungen in der Praxis gerecht zu werden.

Zu diesen Forderungen können beispielsweise bei der Wurstherstellung zählen:
- gute Barriereeigenschaften
- Temperaturbeständigkeit bis Sterilisationstemperatur
- gute Haftung zum Füllgut
- hoher Schrumpf
- hohe Festigkeit, Formstabilität, Prallheit
- gutes Schälverhalten, leichte Schälbarkeit, gutes Anschnittverhalten
- leichte Konfektionierbarkeit, insbesondere Raffbarkeit
- gute Einfärbbarkeit
- gute Bedruckbarkeit und sichere Druckfarbenhaftung
- Unbedenklichkeit laut Lebensmittelrecht (Richtlinien EG, Bundesamt für gesundheitlichen Verbraucherschutz und Veterinärmedizin BGVV, Food and Drug Administration FDA)
- Ökologische Unbedenklichkeit der verwendeten Materialien

Die bisher im Markt bekannten mehrschichtigen, biaxial gereckten, nahtlosen Hüllen sind speziell für die Herstellung und/oder Verpackung von Fleischprodukten, insbesondere Wurst, maßgeschneidert und genügen mehr oder weniger stark aus-geprägt den oben genannten Anforderungen. Es gibt jedoch bestimmte Anwendungen, bei denen insbesondere die Sperreigenschaften der auf dem Markt befindlichen Hüllen nicht ausreichen und wo zudem eine hohe Haftung der Hülle zum Füllgut nicht notwendig oder sogar von Nachteil ist. Zu diesen Anwendungen gehört z.B. die Herstellung von Tiernahrung mit einer gewünschten Haltbarkeit ohne Kühlhaltung von mehreren Monaten oder das Abpacken von besonders empfindlich auf Feuchtigkeitsverlust reagierenden, zur Austrocknung neigenden Füllgütern wie Marzipanmasse. Werden Füllgüter der genannten Art in marktübliche mehrschichtige, biaxial gereckte, nahtlose Kunststoffhüllen gefüllt und über einen längeren Zeitraum bei Raumtemperatur gelagert, kommt es aufgrund einer nicht ausreichenden Wasserdampfsperre der Hülle nach einigen Wochen bis Monaten durch Permeation von aus dem Füllgut stammenden Wasserdampf durch die Hülle von innen nach außen zu einem deutlichen Gewichtsverlust des Füllgutes, das in den meisten Fällen mit einem Faltigwerden der Hülle einhergeht, und/oder es kommt durch eine nicht ausreichende Sauerstoffsperre durch Permeation von Luftsauerstoff durch die Hülle von außen nach innen zu Oxidationsprozessen an der Oberfläche des Füllguts, die Optik und/oder Sensorik beeinträchtigen können. Offensichtliche Abweichung des Füllgutgewichts von der aufgedruckten Herstellerangabe, faltige Optik der Hülle und/oder oberflächliche Verfärbungen des Füllguts erwecken beim Verbraucher den Eindruck von alter Ware ohne jegliche Frische und führen dazu, dass die Ware vom Verbraucher abgelehnt wird.

Ein für die Anwendung als Hülle für Tiernahrung weiterer Nachteil handelsüblicher Kunststoffhüllen ist die hohe Haftung, die solche Hüllen zu proteinhaltigen Füllgütern wie z.B. Fleischprodukten ausbilden. Während die Haftung bei Wurstprodukten für den menschlichen Genuss ausreichend hoch sein muss, um als unappetitlich empfundenen Geleeabsatz zu vermeiden, ist bei Hüllen für Tiernahrung wie z.B. Hundewurst vom Verbraucher eine geringe Haftung erwünscht, damit der Inhalt leicht und möglichst ohne die Notwendigkeit der als unangenehm empfundenen Berührung des Füllgutes aus der aufgeschnittenen Hülle gleitet.

Eine für die genannten Anwendungen geeignete Hülle ist demnach ergänzend bzw. abweichend zu dem oben beschriebenen Anforderungsprofil für Wursthüllen durch folgende Kerneigenschaften gekennzeichnet:
- außerordentlich gute Barriereeigenschaften bezüglich Sauerstoff (Sauerstoffdurchlässigkeit < 5 ml/m²·d·bar bei 23°C und 75 % r. F. zur Vermeidung von Oxidationsprozessen) und Wasserdampf (Wasserdampfdurchlässigkeit < 2 g/m²·d bei 23°C und 85 % r. F. zur Vermeidung von Gewichtsverlusten bei Langzeitlagerung ohne Kühlung)
- geringe Haftung zum Füllgut

Die europäische Anmeldung EP-A-0 107 854 beschreibt ein schlauchförmiges, 5-schichtiges Laminat bestehend aus einer inneren Schicht aus thermoplastischem Harz, einer Mittelschicht aus Vinylidenchlorid-Copolymerisat (PVDC), einer äußeren Schicht aus Olefinharz und zwei Klebeschichten zwischen den Hauptschichten. Die Hülle zeigt mit einer Sauerstoffdurchlässigkeit von 50 ml/m²·d·atm (30°C, 100 % r.F.) und einer Wasserdampfdurchlässigkeit von 5 g/m²·d (40°C, 95 % r. F.) nicht ausreichend hohe Sperrwirkung bezüglich Sauerstoff und Wasserdampf und enthält darüberhinaus als wasserdampfsperrende Komponente halogenhaltiges PVDC, dessen Verwendung ökologisch bedenklich ist und daher heute immer weniger akzeptiert wird.

Die DE-A-40 01 612 gibt eine schlauchförmige, 3-schichtig coextrudierte, biaxial gereckte Hülle mit einer inneren und äußeren Schicht aus Polyamid oder einem Polyamid enthaltenden Polymerblend und einer sauerstoffsperrenden mittleren Schicht aus aromatischem Polyamid oder Copolyamid bekannt. Dieser Verbund ergibt zwar eine hohe Sauerstoffsperrwirkung, jedoch nur eine geringe bis mäßige Sperrwirkung gegen Wasserdampf, welche für eine mehrmonatige Lagerung ohne Kühlhaltung nicht ausreicht. Darüberhinaus kommt es aufgrund der inneren Schicht auf Polyamid-Basis zu einer unerwünscht starken Haftung der Hülleninnenseite zu fett- und proteinhaltigen Füllgütern.

Die DE-A-41 28 081 beschreibt eine mehrschichtige, biaxial gereckte Schlauchfolie, die als Kernschicht mindestens eine sauerstoffsperrende Lage aus Ethylen-Vinylalkohol-Copolymer (EVOH), aromatischem oder aliphatischem (Co-)Polyamid und als innere Schicht mindestens eine wasserdampfsperrende Lage aus aliphatischem (Co-)Polyamid, umfasst. Diese Hülle erfüllt die Forderungen nach einer guten Wasserdampfbarriere. Aus dem Füllgut wird während der Lagerung jedoch Feuchtigkeit an die Kernschicht, die als Sauerstoffsperrschicht dient, weitergegeben. Da die Feuchtigkeit sich in der Kernschicht ansammelt und nicht durch die äußere Polyolefinschicht, die als Wasserdampfsperrschicht dient, abgegeben werden kann, wird die Barriere gegen Sauerstoff während der Lagerzeit immer schlechter. Daher ist diese Hülle für längere Lagerzeiten, insbesondere für eine Lagerung ohne Kühlung, nicht geeignet. Eine außenliegende Polyolefinschicht hat weiterhin den Nachteil, dass die Folie vor dem Bedruckvorgang einem zusätzlichen Schritt, z.B. einer Koronaentlandung, ausgesetzt werden muss, um eine ausreichende Haftung der Druckfarben zu erreichen.

Die DE-A 41 28 082 beschreibt eine mindestens 3-schichtige, biaxial verstreckte Schlauchfolie, die eine Außenschicht aus aliphatischem Polyamid, eine sauerstoffsperrende Kernschicht aus EVOH, aromatischem und/oder aliphatischem (Co-)Polyamid und eine wasserdampfsperrende, Haftung zum Füllgut zeigende innere polyolefinische Schicht, bevorzugt Ionomerpolymer, umfasst. Der Nachteil dieser Hülle ist die Haftung der Innenschicht zum Füllgut und die im Vergleich zu anderen Polyolefinen hohe Wasserdampfdurchlässigkeit von Ionomerpolymeren.

In der EP-A-0 530 538 ist eine schlauchförmige, 5-schichtig coextrudierte, biaxial gereckte Hülle beschrieben, die aus einer äußeren Schicht aus Polyamid, einer zweitäußeren, ggf. sauerstoffsperrenden Schicht aus haftvermittelndem Polyolefin oder EVOH, einer mittleren Schicht aus Polyamid, einer zweitinneren Schicht aus wasserdampfsperrendem, haftvermittelndem Polyolefin und einer inneren Schicht aus Polyamid besteht. Obwohl diese Hülle einen ausgewiesenen wasserdampfsperrenden Charakter besitzt, wurden bei einem Lagertest Gewichtsverluste des Prüffüllguts von minimal 0,3 Gew.-% nach 20 Tagen Lagerung im Kühlhaus beobachtet. Während ein mit diesem Gewichtsverlust korrespondierender Barrierewert für in die angegebene Hülle gefüllte Wurstwaren bei Kühlhaltung und einer auf wenige Wochen begrenzten Lagerung völlig ausreichend ist, lassen diese Angaben umgerechnet auf Lagerbedingungen bei Raumtemperatur über einen Zeitraum von mehreren Monaten jedoch einen Gewichtsverlust erwarten, der die gestellten Anforderungen deutlich verfehlt. Darüberhinaus ist auch bei dieser Hülle aufgrund der inneren Schicht auf Polyamid-Basis eine unerwünscht starke Haftung der Hülleninnenseite an fett- und proteinhaltigen Füllgütern zu erwarten.

In der DE-A-43 39 337 wird eine 5-schichtige Schlauchfolie zur Verpackung und Umhüllung von pastösen Lebensmitteln beschrieben. Diese Schlauchfolie, insbesondere Wursthülle, auf Basis Polyamid ist dadurch gekennzeichnet, dass sie aus einer inneren und einer äußeren Schicht aus dem gleichen Polyamidmaterial, bestehend aus wenigstens einem aliphatischem Polyamid und/oder wenigstens einem aliphatischem Copolyamid und/oder wenigstens einem teilaromatischen Polyamid und/oder wenigstens aus einem teilaromatischen Copolyamid, einer mittleren Polyolefinschicht sowie aus zwei aus dem gleichen Material bestehenden Haftvermittlerschichten aufgebaut ist. Der Anteil des teilaromatischen Polyamids und/oder Copolyamids beträgt 5 bis 60 %, insbesondere 10 bis 50 %, bezogen auf das Gesamtgewicht der Polymermischung aus teilaromatischen und aliphatischen Polyamiden und Copolyamiden. Der Nachteil dieser Hülle ist die nicht ausreichende Barriere gegen Sauerstoff, die zu einer Farbveränderung (Vergrauung) von oxidationsempfindlichen Füllgütern führt. Zusätzlich kommt es auch hier aufgrund der inneren Schicht auf Polyamid-Basis zu einer unerwünscht starken Haftung der Hülleninnenseite zu fettund proteinhaltigen Füllgütern.

Aus der EP-A-0 879 560 ist eine mindestens 4-schichtige, biaxial gereckte Nahrungsmittelhülle mit zwei Sauerstoff-Barriereschichten bekannt. Die Sauerstoffsperrwirkung wird hier im wesentlichen durch eine nicht außen liegende, EVOH enthaltende Schicht und eine außen liegende, Polyamid mit aromatischen Anteilen enthaltende Schicht bewirkt. Der Verbund zeigt allerdings eine für Langzeitlagerung ohne Kühlhaltung nicht ausreichende Wasserdampfbarriere.

Die hier zum Stand der Technik beschriebenen Folienverbunde weisen bezogen auf das oben beschriebene Anforderungsprofil in einzelnen Punkten Defizite auf. Insbesondere zeigen die im Markt bekannten Hüllen entweder Defizite hinsichtlich der wesentlichen Merkmale Wasserdampfbarriere oder Sauerstoffbarriere auf. Eine Kombination dieser Barriereeigenschaften im Hinblick auf die bezüglich Langzeitlagerungen gestellten Anforderungen in Verbindung mit einer geringen Neigung der Innenschicht zur Haftung am Füllgut wurde bisher nicht erreicht und wird von keinem am Markt befindlichen Produkt erfüllt.

Es stellte sich daher die Aufgabe, eine Nahrungsmittelhülle zu entwickeln, die das genannte Anforderungsprofil insbesondere hinsichtlich einer ausgezeichneten Wasserdampf- und Sauerstoffbarriere erfüllt und deren Innenseite nur eine geringe Haftung zu fett- und proteinhaltigen Füllgütern zeigt.

Die vorliegende Erfindung löst diese Aufgabe durch Bereitstellung einer mehrschichtigen, coextrudierten, schlauchförmigen, biaxial gereckten Hülle bestehend aus einer äußeren Schicht A, die als Hauptkomponente ein Polyamid oder eine Mischung mehrerer Polyamide enthält, einer zweitäußeren Schicht B, die sauerstoffsperrenden Charakter aufweist, einer mittleren Schicht C, die als Hauptkomponente ein Polyamid oder eine Mischung mehrerer Polyamide enthält, einer inneren wasserdampfsperrenden, geringe Haftung zum Füllgut ausbildenden Schicht E, die als Hauptkomponente ein Polypropylenhomo- oder -copolymer oder eine Mischung dieser enthält, sowie einer zweitinneren, gegenüber den Schichten C und E haftungsvermittelnd wirkenden Schicht D, die mindestens ein modifiziertes Polyolefin enthält.

Die spezifischen Eigenschaften der erfindungsgemäßen Hülle resultieren einerseits aus dem speziellen Schichtaufbau, der durch die von außen nach innen verlaufende Schichtabfolge A/B/C/D/E charakterisiert ist.

Die äußere, ohne Vorbehandlung bedruckbare Schicht A besteht als Hauptkomponente entweder aus einem aliphatischen Homopolyamid oder einem aliphatischen Copolyamid oder einem Blend aus aliphatischem Homo- und Copolyamid oder einem Blend aus aliphatischem Homo- oder Copolyamid und einem teilaromatischen Polyamid. Als aliphatische Homo- und Copolyamide eignen sich solche Polyamide, wie sie in allgemeiner Weise im Kunststoffhandbuch Teil 3/4 "Polyamide" Seite 22 ff, Carl Hanser Verlag München Wien 1998 beschrieben sind. Das aliphatische Polyamid ist ein Homopolyamid aus aliphatischen primären Diaminen und aliphatischen Dicarbonsäuren oder ein Homopolymerisat von ω-Amino-carbonsäuren oder deren Lactamen. Das aliphatische Copolyamid enthält die gleichen Einheiten und ist z. B. ein Polymer auf Basis eines oder mehrerer aliphatischer Diamine und einer oder mehrerer Dicarbonsäuren und/oder einer oder verschiedener ω-Aminocarbonsäuren oder deren Lactamen. Die aliphatischen primären Diamine enthalten insbesondere 4 bis 8 C-Atome. Geeignete Diamine sind Tetra-, Penta-, Hexa- und Octamethylendiamin, besonders bevorzugt ist Hexamethylendiamin. Die aliphatischen Dicarbonsäuren enthalten insbesondere 4 bis 12 C-Atome. Beispiele für geeignete Dicarbonsäuren sind Adipinsäure, Azelainsäure, Sebazinsäure und Dodecandicarbonsäure. Die ω-Aminocarbonsäure bzw. deren Lactame enthalten 6 bis 12 C-Atome. Ein Beispiel für ω-Aminocarbonsäuren ist die 11-Aminoundecansäure. Beispiele für Lactame sind ε-Caprolactam und ω-Laurinlactam. Besonders bevorzugte aliphatische Polyamide sind Polycaprolactam (PA 6) und Polyhexamethylenadipinamid (PA66). Ein besonders bevorzugtes aliphatisches Copolyamid ist PA 6/66, das aus Caprolactam-, Hexamethylendiamin- und Adipinsäureeinheiten besteht. Teilaromatische Polyamide werden im Kunststoffhandbuch Teil 3/4 "Polyamide" Seite 803 ff Carl Hanser Verlag München Wien 1998 beschrieben.

Bei den teilaromatischen Polyamiden und Copolyamiden können entweder die Diamineinheiten überwiegend oder ausschließlich die aromatischen Einheiten bilden, während die Dicarbonsäureeinheiten überwiegend oder ausschließlich aliphatischer Natur sind, oder die Diamineinheiten sind überwiegend oder ausschließlich aliphatischer Natur, während die Dicarbonsäureienheiten überwiegend oder ausschließlich die aromatischen Einheiten bilden. Beispiele für die erste Ausführungsform sind teilaromatische Polyamide oder Copolyamide, bei denen die aromatischen Diamineinheiten aus m-Xylylendiamin und Phenylendiamin bestehen. Die aliphatischen Dicarbonsäureeinheiten dieser Ausführungsform enthalten gewöhnlich 4 bis 10 C-Atome, wie z.B. Adipinsäure, Sebazinsäure und Azelainsäure.

Neben den aromatischen Diamineinheiten und den aliphatischen Dicarbonsäureeinheiten können auch noch aliphatische Diamineinheiten und aromatische Dicarbonsäureeinheiten in Mengen von jeweils bis zu 5 Mol-% enthalten sein. Eine besonders bevorzugte Ausführungsform besteht aus m-Xylylendiamin- und Adipinsäure-Einheiten. Dieses Polyamid (PA-MXD6) wird z.B. von der Firma Mitsubishi Gas Chemical Company Inc. unter dem Namen MX-Nylon vertrieben. Beispiele für diese zweite Ausführungsform sind teilaromatische Polyamide und Copolyamide, bei denen die aliphatischen Diamine gewöhnlich 4 bis 8 C-Atome enthalten. Unter den aromatischen Dicarbonsäuren sind insbesondere Isophthalsäure und Terephthalsäure hervorzuheben. Neben den aliphatischen Diamineinheiten und den aromatischen Dicarbonsäureeinheiten können auch noch aromatische Diamin-einheiten und aliphatische Dicarbonsäureeinheiten in Mengen von jeweils bis zu 5 Mol-% enthalten sein.

Eine besonders bevorzugte Ausführungsform besteht aus Einheiten von Hexamethylendiamin, Isophthalsäure und Terephthalsäure. Dieses Polyamid (PA6I/6T) wird z. B. von der Fa. DuPont De Nemours unter dem Namen Selar PA vertrieben. Die Zugabe von teilaromatischem Polyamid PA6I/6T erfolgt in bevorzugter Weise in Mengen zwischen 2 und 40 Gew.-% pro Schicht, insbesondere zwischen 5 und 20 Gew.-%. Die Zugabe von teilaromatischem Polyamid PA-MXD6 erfolgt in bevorzugter Weise in Mengen zwischen 5 und 40 Gew.-% pro Schicht, insbesondere zwischen 10 und 30 Gew.-%. Neben dem Polyamidanteil kann Schicht A Verarbeitungshilfsmittel, anorganischen Füllstoffe, Lichtschutzpigmente, Farbpigmente und/oder Farbstoffe enthalten.

Die zweitäußere, dem Gesamtverbund eine effektive Sperrwirkung gegen Sauerstoff verleihende Schicht B besteht aus einem annähernd vollständig hydrolysierten Ethylen-Vinylacetat-Copolymeren (EVOH) mit einem Ethylen-Anteil von 25 bis 53 Gewichts-%, bevorzugt von 29 bis 38 Gewichts-%. Die Schichtstärke liegt in einer bevorzugten Ausführungsform zwischen 2 und 8 µm, insbesondere zwischen 3 und 6 µm.

Die mittlere, maßgeblich zur Stabilität und Kaliberkonstanz beitragende Schicht C besteht aus den in der Beschreibung von Schicht A erwähnten Polymeren und Zusatzstoffen, hat aber gegebenenfalls eine andere Zusammensetzung als Schicht A.

Die zweitinnere, zwischen mittlerer Schicht C und innerer Schicht E haftvermittelnde Schicht D besteht bevorzugt aus modifizierten Polyolefinen. Es handelt sich dabei um modifizierte Homo- und Copolymere des Ethylens oder Propylens und gegebenenfalls weiterer linearer α-Olefine mit 3 bis 8 C-Atomen, die Monomere aus der Gruppe der α,β-ungesättigten Dicarbonsäuren, wie z.B. Maleinsäure, Fumarsäure, Itaconsäure oder deren Säureanhydride, Säureester, Säureamide oder Säureimide aufgepropft enthalten. Weiterhin geeignet sind ionomere Copolymerisate von Ethylen und Propylen und gegebenenfalls von weiteren linearen, 3 bis 8 C-Atome enthaltenden α-Olefinen mit α,β-ungesättigten Carbonsäuren, wie Acrylsäure, Methacrylsäure und/oder deren Metallsalze und/oder deren Alkylester oder entsprechende Propfpolymere der genannten Monomere auf Polymere oder partiell verseifte Ethylen-Vinylester-Copolymerisate, die gegebenenfalls mit einem Monomer der genannten Säuren pfropfpolymerisiert sind. Die Schichtdicken der Haftvermittlerschichten liegen in einer bevorzugten Ausführungsform zwischen 1 und 6 µm.

Die innere, dem Gesamtverbund eine effektive Sperrwirkung gegen Wasserdampf verleihende und an polaren Substanzen nur wenig haftende Schicht E besteht als Hauptkomponente aus einem Polyolefinhomo- oder copolymer oder einem Blend aus diesen mit einem Schmelzpunkt der niedrigstschmelzenden Komponente von mindestens 136°C, bevorzugt mindestens 147°C. Darüberhinaus kann die Schicht auch andere Stoffe, bevorzugt Farbpigmente, enthalten. Die bevorzugte Schichtdicke der Schicht E beträgt weniger als 10 µm.

Zur Verbesserung des Verarbeitungsverhaltens und des Öffnungsverhaltens können der innen liegenden Schicht und/oder der außen liegenden Schicht Additive zugegeben werden. Hierbei haben sich vor allem Antiblock- und Gleitadditive als geeignet erwiesen. Diese Antiblockadditive basieren z.B. auf Siliciumoxidbasis.

Zur Reduzierung des Einflusses von Licht auf das Füllgut können einzelne Schichten mit UV-Licht-Absorbern additiviert werden. Hier haben sich anorganische Pigmente, insbesondere Zink-, Titan-, Eisen- und Siliciumoxide, bewährt. In einer besonders bevorzugten Ausführungsform wird das anorganische Feinstpigment mittels Masterbatch, dessen Trägermaterial mit dem Grundmaterial der Schicht kompatibel ist, in den Folienverbund eingebracht. Die Menge des Pigments liegt bei 0,1 bis 5 Gew.-%, bevorzugt 0,5 bis 2,5 Gew.-% bezogen auf das Gesamtgewicht der Hülle.

Die spezifischen Eigenschaften der erfindungsgemäßen Hülle resultieren neben dem Schichtaufbau und den verwendeten Rohstoffen andererseits auch aus dem Herstellprozess, der sich in folgende Verfahrensschritte unterteilt:
1. Coextrusion, Kalibrierung und Kühlung des zu reckenden Primärschlauches
2. Wiedererwärmung des Primärschlauches auf geeignete Recktemperatur
3. Biaxiales Verstrecken durch Anlegen einer Druckdifferenz zwischen Schlauchinnenvolumen und der Schlauchumgebung sowie durch eine die Längsverstreckung unterstützende Längsabzugskraft.
4. Thermofixierung der biaxial gereckten Schlauchfolie
5. Aufwicklung und nachfolgende Offline-Konfektionierungsschritte (Raffen etc.)

Die Herstellung der erfindungsgemäßen Hülle erfolgt vorzugsweise nach dem "double bubble"- beziehungsweise nach dem "injected bubble"- Verfahren, bei dem zunächst das schlauchförmig durch eine Kreisringdüse extrudierte Coextrudat durch intensive Kühlung in den Festkörperzustand überführt wird und dann im weiteren Verlauf des Herstellungsverfahrens der so erhaltene dickwandige Primärschlauch (300 bis 600 µm) in einer oder mehreren Stufen auf eine zur Festkörperverstreckung geeignete Temperatur durch ein geeignetes Energieeintagungsverfahren wiedererwärmt wird, um anschließend zwischen zwei dicht abschließenden Walzenpaaren durch Einschluss einer mit Gas oder Flüssigkeit gefüllten Druckblase sowohl in Quer- als auch in Längsrichtung verstreckt zu werden. Während das Verhältnis der unterschiedlichen Umfangsgeschwindigkeiten der die Blase begrenzenden Walzen dem Längsreckgrad entspricht, errechnet sich der Querreckgrad aus dem Verhältnis des Schlauchdurchmessers im gereckten Zustand zu dem des ungereckten Primärschlauchs. Das Reckverhältnis (RV) gibt den Quotienten aus Querreckgrad und Längsreckgrad an, der Flächenreckgrad (FR) ergibt sich aus dem Produkt von Längsreckgrad und Querreckgrad und ist bevorzugt größer als 6, besonders bevorzugt beträgt er mindestens 8. Während der biaxialen Verstreckung richten sich die Moleküle des im Festkörperzustand befindlichen Schlauches derart aus, dass der Elastizitätmodul und die Festigkeiten sowohl in Quer- als auch in Längsrichtung in erheblichem Maße gesteigert werden. Anschließend an die erste Verstreckstufe wird in einer zweiten Blase ein definierter Rückschrumpf (Durchmesserreduzierung) der wiederum zwischen zwei Walzenpresseuren mittels Druckluftpolster aufgeblasenen Hülle zugelassen und ggf. gleichzeitig eine Nachverstreckung in Längsrichtung vorgenommen. Der Durchmesser des Schlauches kann durch Variation des Druckluftniveaus in der anschließend durchzuführenden Thermofixierung gesteuert werden. Mittels der Thermofixierung können die anzustrebenden Schrumpf-werte der Hülle über die Parameter Rückschrumpf (Quotient aus der Differenz von Reckkaliber und Thermofixierkaliber zu Thermofixierkaliber), Themofixiertemperatur und Verweilzeit exakt eingestellt werden. Zur Erreichung einer höheren Flexibiliät kann die Thermofixierung in Gegenwart von Wasser oder Wasserdampf erfolgen. Vor dem Aufwickeln der biaxial gereckten Schlauchfolie sollte diese ausreichend gekühlt werden um die Aktivierung von Schrumpfspannungen auf dem Wickel zu vermeiden. Die biaxial verstreckte Schlauchfolie wird in einem Durchmesserbereich zwischen 10 und 400 mm, bevorzugt zwischen 25 und 220 mm hergestellt. Die Summe aller Schichtdicken der coextrudierten schlauchförmigen Hülle beträgt 25 bis 80 µm, bevorzugt 35 bis 65 µm.

Die coextrudierten Schlauchhüllen weisen üblicherweise einen freien Schrumpf in mindestens einer Orientierungsrichtung gemessen bei 100°C nach 15 min zwischen 1 und 25 %, insbesondere zwischen 10 und 20 % auf. Unter 40°C liegt der freie Schrumpf unterhalb von 3 %, so dass eine ausreichende Lagerstabilität der gegebenenfalls thermofixierten Hüllen gewährleistet ist.

Die relevanten Eigenschaften der nachfolgend beschriebenen Hüllen wurden folgendermaßen ermittelt:

### Wasserdampfdurchlässigkeit (WDDu)

Die Bestimmung der WDDu erfolgt gemäß DIN 53122 Blatt 2 bei einer Temperatur von 23°C und einer relativen Luftfeuchtigkeit von 85 %. Der Wert gibt die Menge an Wasserdampf in Gramm an, die unter den angegebenen Prüfbedingungen während eines Tages (24 Stunden) durch eine 1 m² große Fläche der zu prüfenden Folie durchtritt.

### Sauerstoffdurchlässigkeit (O2Du)

Die Bestimmung der O2Du erfolgt gemäß DIN 53380 Teil 3 bei einer Temperatur von 23°C und einer relativen Luftfeuchtigkeit von 75 %. Der Wert gibt das Volumen an Sauerstoff in Millilitern an, das bei einem Sauerstoff-Partialdruck von 1 bar unter den angegebenen Prüfbedingungen während eines Tages (24 Stunden) durch eine 1 m² große Fläche der zu prüfenden Folie durchtritt.

### Lagertest bei 23°C über 90 Tage

Die zu prüfenden Hüllen werden mittels einer handelsüblichen Füllmaschine mit oxidationsempfindlichem Testfüllgut (Prüfbrät auf Brühwurstbasis) prall gefüllt, beidseitig durch einen Clip verschlossen und anschließend im Bereich der Clip-Verschlüsse mit Wachs versiegelt. Nach dem Wiegen der erhaltenen Würste werden diese in einem Lagerraum bei Raumtemperatur gelagert. Nach Ablauf von 90 Tagen werden die Würste erneut gewogen, wobei sich der prozentuale Gewichtsverlust aus dem Verhältnis der Differenz von Gewicht vor der und nach der Lagerung zum Gewicht vor der Lagerung ergibt. Die optische Beschaffenheit (z.B. Vergrauung) der Testfüllgutoberfläche sowie die Faltigkeit der Hülle nach der Lagerung wird durch subjektive vergleichende Beurteilung durch Fachleute nach Schulnoten beurteilt, wobei ein frisch mit Brühwurst gefülltes Muster als Vergleich (optische Beschaffenheit des Bräts: keine Vergrauung, d.h. Schulnote 1, Faltigkeit der Hülle: prall, ohne Falten, d.h. Schulnote 1) dient.

### Haftung des Füllguts an der Innenseite der Hülle

Die Bestimmung erfolgt an mit Testfüllgut (Prüfbrät auf Brühwurstbasis) gefüllten Mustern durch subjektive vergleichende Beurteilung unabhängig voneinander durch Fachleute.

Ein weiterer Gegenstand der Erfindung ist die Verwendung der erfindungsgemäßen Hülle als Nahrungsmittelhülle, insbesondere für pastöse oder flüssige Nahrungsmittel. Bevorzugt wird die Hülle zur Verpackung von Tiernahrung, Käse, Teigmassen, Marzipan oder Suppen verwendet.

Der Gegenstand der Erfindung soll anhand der folgenden Beispiele näher erläutert werden.

### Beispiele:

Die nachfolgend aufgeführten Beispiele wurden durch biaxiales Verstrecken von über eine Mehrschichtdüse coextrudierten Primärschläuchen mit einem Durchmesser von 15 mm realisiert und besitzen nach der Thermofixierung einen Durchmesser von 45 mm. Die unterschiedlichen Materialien, die zur Herstellung der erfindungsgemäßen coextrudierten Hüllen und der Vergleichsbeispiele eingesetzt werden, werden wie folgt abgekürzt:

| | | |
|---|---|---|
| PA | Polyamid 6 oder Polyamid 6/66 | Bsp.: Durethan B 38 F (Bayer AG) |
| a-PA | teilaromatisches Copolyamid | Bsp.: Selar PA 3426 (Du Pont) |
| PO | Polyolefin | Bsp.: Moplen X30S (Montell) |
| HV | Haftvermittler auf Polyolefinbasis | Bsp.: Admer QF 551 (Mitsui Chemicals) |
| XX | Ethylen-Vinylalkohol-Copolymer | Bsp.: EVAL LC F 101 BZ (Kuraray) |
| MB | Farbmasterbatch auf PA-Basis | Bsp.: Farbmasterbatch rot (Wilson) |

### Beispiel 1 (B1):

| | | |
|---|---|---|
| Schicht A (außen) | PA | (22 µm) |
| Schicht B | XX | (3 µm) |
| Schicht C | PA | (12 µm) |
| Schicht D | HV | (6 µm) |
| Schicht E (innen) | PO | (8 µm) |

### Beispiel 2 (B2):

| | | |
|---|---|---|
| Schicht A | 75 % PA, 10 % a-PA, 15 % MB | (22 µm) |
| Schicht B | XX | (2 µm) |
| Schicht C | PA | (14 µm) |
| Schicht D | HV | (4 µm) |
| Schicht E | PO | (7 µm) |

### Vergleichsbeispiel 1 (V1):

| | | |
|---|---|---|
| Schicht A | 95 % PA, 5 % a-PA | (22 µm) |
| Schicht B | XX | (3 µm) |
| Schicht C | PA | (12 µm) |
| Schicht D | HV | (4 µm) |
| Schicht E | PA | (12 µm) |

### Vergleichsbeispiel 2 (V2):

| | | |
|---|---|---|
| Schicht A | PA | (24 µm) |
| Schicht B | HV | (2 µm) |
| Schicht C | PO | (15 µm) |
| Schicht D | HV | (2 µm) |
| Schicht E | PA | (12 µm) |

### Vergleichsbeispiel 3 (V3):

| | | |
|---|---|---|
| Schicht A | PO | (8 µm) |
| Schicht B | HV | (4 µm) |
| Schicht C | PA | (22 µm) |
| Schicht D | XX | (3 µm) |
| Schicht E | PA | (8 µm) |

Die in den Beispielen aufgeführten Schichtdicken der Einzelschichten beziehen sich auf die Endprodukte, d.h. die gereckten Schlauchfolien.

Die Durchlässigkeitswerte für Wasserdampf und Sauerstoff sowie die anwendungstechnischen Beurteilungen der gemäß den Beispielen und Vergleichsbeispielen hergestellten Hüllen sind in nachfolgender Tabelle zusammengefasst:

| | **B1** | **B2** | **V1** | **V2** | **V3** |
|---|---|---|---|---|---|
| Wasserdampfdurchlässigkeit (g·m⁻²·d⁻¹) | 1,7 | 1,8 | 4,0 | 1,5 | 1,8 |
| Sauerstoffdurchlässigkeit (ml·m⁻²·d⁻¹·bar⁻¹) | 4,6 | 4,3 | 4,0 | 25,0 | 4,5 |
| Gewichtsverlust des Testfüllguts bei Lagertest (Gew.-%) | 1,8 | 1,9 | 5,0 | 1,6 | 1,9 |
| Faltigkeit der Hülle nach Lagertest (Bewertung) | 1 | 1 | 5 | 2 | 2 |
| Optische Beschaffenheit des Füllguts nach Lagertest (Bewertung) | 1 | 1 | 1 | 4 | 1 |
| Haftung des Füllguts an der Innenschicht der Hülle | gering | gering | stark | stark | stark |
| Bewertung: 1 = sehr gut 2 = gut 3 = befriedigend 4 = ausreichend 5 = mangelhaft | | | | | |

## Patentansprüche

1. Mehrschichtige, coextrudierte, schlauchförmige, biaxial gereckte Hülle, bestehend aus, von außen nach innen betrachtet,
a) einer äußeren Schicht A, die als Hauptkomponente ein Polyamid oder eine Mischung mehrerer Polyamide enthält,
b) einer Schicht B, die sauerstoffsperrenden Charakter aufweist,
c) einer Kernschicht C, die als Hauptkomponente ein Polyamid oder eine Mischung mehrerer Polyamide enthält,
d) einer, gegenüber der benachbarten Schicht C und der benachbarten Schicht E haftungsvermittelnd wirkenden Schicht D, die mindestens ein modifiziertes Polyolefin enthält, und
e) einer inneren wasserdampfsperrenden Schicht E, die als Hauptkomponente ein Polyolefinhomo- oder copolymer oder ein Blend aus diesen umfasst.

2. Hülle gemäß Anspruch 1, **dadurch gekennzeichnet, dass** die Haupt-komponenten der Schichten A und C entweder aus einem aliphatischen Homopolyamid oder einem aliphatischen Copolyamid oder einem Blend aus aliphatischem Homo- und Copolyamid oder einem Blend aus aliphatischem Homopolyamid und einem teilaromatischen Polyamid bestehen.

3. Hülle gemäß Anspruch 2, **dadurch gekennzeichnet, dass** die verwendeten teilaromatischen Polyamide im wesentlichen aus m-Xylylendiamin- und Adipinsäureeinheiten oder aus Einheiten von Hexamethylendiamin, Isophthalsäure und Terephthalsäure aufgebaut sind.

4. Hülle gemäß Anspruch 3, **dadurch gekennzeichnet, dass** die Schichten A und C in ihrer Zusammensetzung unterschiedlich sind.

5. Hülle gemäß Anspruch 1, **dadurch gekennzeichnet, dass** Schicht B aus einem annähernd vollständig hydrolysierten Ethylen-Vinylacetat-Copolymeren (EVOH) mit einem Ethylen-Anteil zwischen 25 und 53 Gewichts-%, bevorzugt zwischen 29 und 38 Gewichts-% besteht.

6. Hülle gemäß Anspruch 1, **dadurch gekennzeichnet, dass** Schicht E im wesentlichen aus einem Polypropylenhomo- oder copolymer besteht.

7. Hülle gemäß Anspruch 1, **dadurch gekennzeichnet, dass** Schicht E eine Schichtdicke von weniger als 10 µm aufweist.

8. Hülle gemäß Anspruch 1, **dadurch gekennzeichnet, dass** Schicht D modifizierte Homo- und/oder Copolymere von α-Olefinen mit 2 bis 8 C-Atomen enthält, die Monomere aus der Gruppe der α,β-ungesättigten Dicarbonsäuren und/oder Monocarbonsäuren und/oder deren Derivate aufgepfropft oder copolymerisiert enthalten.

9. Hülle nach einem der vorstehenden Ansprüche, **dadurch gekennzeichnet, dass** eine oder mehrere Schichten pigmentiert sind.

10. Hülle nach einem der vorstehenden Ansprüche, **dadurch gekennzeichnet, dass** die Summe aller Schichtdicken 25 bis 80 µm, insbesondere 35 bis 65 µm beträgt.

11. Hülle nach einem der vorstehenden Ansprüche, **dadurch gekennzeichnet, dass** der als Produkt von Längs- und Querreckgrad definierte Flächenreckgrad mindestens 4, bevorzugt mindestens 6 und besonders bevorzugt mindestens 8 beträgt.

12. Hülle nach einem der vorstehenden Ansprüche, **dadurch gekennzeichnet, dass** diese thermofixiert ist.

13. Hülle nach einem der vorstehenden Ansprüche, **dadurch gekennzeichnet, dass** der freie Schrumpf in mindestens einer Orientierungsrichtung, gemessen bei 100°C in Wasser nach 15 min, 1 bis 25 %, insbesondere 10 bis 20 % beträgt.

14. Hülle nach einem der vorstehenden Ansprüche, **dadurch gekennzeichnet, dass** ihr Enddurchmesser mindestens 10 und höchstens 400 mm, bevorzugt mindestens 25 und höchstens 220 mm beträgt.

15. Verwendung der Hülle gemäß einem oder mehrerer der vorstehenden Ansprüche als Nahrungsmittelhülle.

## Revendications

1. Enveloppe tubulaire à plusieurs couches, étirée biaxialement et coextrudée, se composant de, en la considérant de l'extérieur vers l'intérieur:
a) une couche extérieure A, qui contient comme composant principal un polyamide ou un mélange de plusieurs polyamides,
b) une couche B, qui présente un caractère de barrière contre l'oxygène,
c) une couche de coeur C, qui contient comme composant principal un polyamide ou un mélange de plusieurs polyamides,
d) une couche D, agissant comme agent adhésif à l'égard de la couche voisine C et de la couche voisine E, qui contient au moins une polyoléfine modifiée, et
e) une couche intérieure E formant barrière à la vapeur d'eau, qui comprend comme composant principal un homo- ou copolymère d'oléfine ou un mélange de ceux-ci.

2. Enveloppe selon la revendication 1, **caractérisée en ce que** les composants principaux des couches A et C se composent soit d'un homopolyamide aliphatique soit d'un copolyamide aliphatique soit d'un mélange d'homopolyamide et de copolyamide aliphatique soit d'un mélange d'homopolyamide aliphatique et d'un polyamide partiellement aromatique.

3. Enveloppe selon la revendication 2, **caractérisée en ce que** les polyamides partiellement aromatiques utilisés sont constitués essentiellement d'unités de m-xylylènediamine et d'acide adipique ou d'unités de hexaméthylènediamine, d'acide isophtalique et d'acide téréphtalique.

4. Enveloppe selon la revendication 3, **caractérisée en ce que** les couches A et C sont de compositions différentes.

5. Enveloppe selon la revendication 1, **caractérisée en ce que** la couche B se compose d'un copolymère éthylène-acétate de vinyle presque complètement hydrolysé (EVOH) avec une proportion d'éthylène comprise entre 25 et 53% en poids, de préférence entre 29 et 38% en poids.

6. Enveloppe selon la revendication 1, **caractérisée en ce que** la couche B se compose essentiellement d'un homo- ou copolymère de polypropylène.

7. Enveloppe selon la revendication 1, **caractérisée en ce que** la couche E présente une épaisseur de moins de 10 µm.

8. Enveloppe selon la revendication 1, **caractérisée en ce que** la couche D contient des homo- ou copolymères modifiés d'oléfines α avec 2 à 8 atomes de carbone, qui contiennent des monomères du groupe des acides dicarboxyliques α,β insaturés et/ou des acides monocarboxyliques et/ou leurs dérivés greffés ou copolymérisés.

9. Enveloppe selon l'une quelconque des revendications précédentes, **caractérisée en ce qu'**une ou plusieurs couche(s) est/sont pigmentée(s).

10. Enveloppe selon l'une quelconque des revendications précédentes, **caractérisée en ce que** la somme de toutes les épaisseurs des couches vaut de 25 à 80 µm, en particulier de 35 à 65 µm.

11. Enveloppe selon l'une quelconque des revendications précédentes, **caractérisée en ce que** le degré d'allongement superficiel, défini comme le produit du degré d'allongement longitudinal et transversal, vaut au moins 4, de préférence au moins 6 et de préférence encore au moins 8.

12. Enveloppe selon l'une quelconque des revendications précédentes, **caractérisée en ce que** celle-ci est thermofixée.

13. Enveloppe selon l'une quelconque des revendications précédentes, **caractérisée en ce que** le retrait libre dans au moins une direction d'orientation, mesuré à 100°C dans l'eau après 15 min, vaut de 1 à 25%, en particulier de 10 à 20%.

14. Enveloppe selon l'une quelconque des revendications précédentes, **caractérisée en ce que** son diamètre final vaut au moins 10 et au plus 400 mm, de préférence au moins 25 et au plus 220 mm.

15. Utilisation de l'enveloppe selon une ou plusieurs des revendications précédentes comme enveloppe pour aliments.

## Claims

1. Multilayer, coextruded, tubular, biaxially stretched casing consisting of, viewed from the outside inwards,
a) an outer layer A, which contains a polyamide or a mixture of two or more polyamides as the principal component,
b) a layer B, which has oxygen barrier properties,
c) a core layer C, which contains a polyamide or a mixture of two or more polyamides as the principal component,
d) a layer D which acts as a coupling layer towards the adjacent layer C and the adjacent layer E, which layer D contains at least one modified polyolefin and
e) an inner water vapour barrier layer E, which layer contains a polyolefin homo- or copolymer or a blend of these as the principal component.

2. Casing according to claim 1, **characterised in that** the principal components of layers A and C consist of an aliphatic homopolyamide or of an aliphatic copolyamide or of a blend of aliphatic homo- and copolyamide or of a blend of aliphatic homopolyamide and a partially aromatic polyamide.

3. Casing according to claim 2, **characterised in that** the partially aromatic polyamides used are substantially prepared from m-xylylenediamine and adipic acid units or from units of hexamethylenediamine, isophthalic acid and terephthalic acid.

4. Casing according to claim 3, **characterised in that** layers A and C differ with regard to the composition thereof.

5. Casing according to claim 1, **characterised in that** layer B consists of an almost completely hydrolysed ethylene/vinyl acetate copolymer (EVOH) with an ethylene content of between 25 and 53 wt.%, preferably of between 29 and 38 wt.%.

6. Casing according to claim 1, **characterised in that** layer E substantially consists of a polypropylene homo- or copolymer.

7. Casing according to claim 1, **characterised in that** layer E has a layer thickness of less than 10 µm.

8. Casing according to claim 1, **characterised in that** layer D contains modified homo- and/or copolymers of α-olefins having 2 to 8 C atoms, which contain grafted or copolymerised monomers from the group of α,β-unsaturated dicarboxylic acids and/or monocarboxylic acids and/or the derivatives thereof.

9. Casing according to one of the preceding claims, **characterised in that** one or more layers are pigmented.

10. Casing according to one of the preceding claims, **characterised in that** the sum of all layer thicknesses is 25 to 80 µm, in particular 35 to 65 µm.

11. Casing according to one of the preceding claims, **characterised in that** the degree of stretching per unit area, which is defined as the product of the longitudinal and transverse degree of stretching, is at least 4, preferably at least 6 and particularly preferably at least 8.

12. Casing according to one of the preceding claims, **characterised in that** it is heat set.

13. Casing according to one of the preceding claims, **characterised in that** free shrinkage in at least one direction of orientation, measured at 100°C in water after 15 minutes, is 1 to 25%, in particular 10 to 20%.

14. Casing according to one of the preceding claims, **characterised in that** the final diameter thereof is at least 10 and at most 400 mm, preferably at least 25 and at most 220 mm.

15. Use of the casing according to one or more of the preceding claims as a foodstuff casing.
